# EUROPÄISCHE PATENTSCHRIFT

(11) **EP 2 835 248 B1**
(45) Veröffentlichungstag und Bekanntmachung des Hinweises auf die Patenterteilung: **20.09.2017**
(21) Anmeldenummer: 14170519.4
(22) Anmeldetag: 30.05.2014
(51) Int. Cl.: B29C 49/78, B29B 11/08, B29C 49/12, B29C 49/80, B29C 49/06, B29C 49/42, B29B 11/14

(54) **VERFAHREN ZUR PRODUKTIONSKONTROLLE BEIM STRECKBLASEN VON KUNSTSTOFFBEHÄLTERN, TESTVORFORMLING UND BLASMASCHINE**
METHOD FOR PRODUCTION TESTING IN STRETCH BLOWING OF PLASTIC CONTAINERS, TEST PREFORM AND BLOW MOULDING MACHINE
PROCÉDÉ DE CONTRÔLE DE PRODUCTION LORS DE L'ÉTIRAGE-GONFLAGE DE RÉCIPIENTS EN PLASTIQUE, PRÉFORMES D'ESSAI ET APPAREIL

(30) Priorität: 05.08.2013 DE 102013215372
(43) Veröffentlichungstag der Anmeldung: 11.02.2015
(73) Patentinhaber: Krones AG, 93073 Neutraubling (DE)
(72) Erfinder: HANER, Arno, 93073 Neutraubling (DE); HUETTNER, Gerald, 93073 Neutraubling (DE)
(74) Vertreter: Grünecker Patent- und Rechtsanwälte PartG mbB

(56) Entgegenhaltungen:
- EP-A1- 1 175 990
- US-A- 4 131 666

## Beschreibung

Die Erfindung betrifft ein Verfahren zur Produktionskontrolle beim Streckblasen von Kunststoffbehältern in einer Blasmaschine, einen Testvorformling zum Durchführen des erfindungsgemäßen Verfahrens und eine Vorrichtung zum Durchführen des erfindungsgemäßen Verfahrens. Beim Streckblasen von Kunststoffbehältern aus erwärmten Vorformlingen werden einzelne Wandbereiche der Vorformlinge in unterschiedlichem Ausmaß verstreckt, woraus unterschiedlich dicke Wandbereiche der Behälter resultieren. Das Verstrecken einzelner Wandbereiche lässt sich durch Maschinenparameter beim Erwärmen und Aufblasen der Vorformlinge gezielt beeinflussen. Entsprechend variiert die Verstreckung je nach Schwankung dieser Parameter für einzelne Blaskavitäten, Heizeinrichtungen und/oder je nach Materialbeschaffenheit und Abmessung der Vorformlinge. Beispielsweise kann es bezogen auf den durch die Blaskavität reproduzierbar vorgegebenen Außenumfang des geblasenen Behälters zu asymmetrischen Wandverstreckungen im Bereich des Behälterbodens kommen.

Zur Kontrolle der Materialverteilung im geblasenen Behälter ist es beispielsweise aus der US 2008/0211125 A1 bekannt, die Wandbereiche von Vorformlingen durch ringartige Verdickungen in Längsrichtung reproduzierbar zu unterteilen und die Lage der Verdickungen an den geblasenen Behältern zu vermessen, um daraus auf die Verteilung der Wanddicke des derart hergestellten Behälters zu schließen. Mit derartigen Verdickungen lassen sich jedoch in der Regel lediglich Wanddickenverteilungen in Längsrichtung der Behälter ermitteln. Ferner sind die Verdickungen am hergestellten Behälter sichtbar und stören je nach Verwendungszweck das Erscheinungsbild des Behälters.

Auch die EP 1 175 990 A1 offenbart ein solches Verfahren, wobei die ringartigen Verdickungen nach dem Blasen als transparente Verzerrungen in der Behälterwand erkennbar sind, die daraufhin mittels Kameras vermessen wird. EP 1 175 990 offenbart ein Verfahren gemäß dem Oberbegriff des Anspruchs 1, ein Testvorformling gemäß dem Oberbegriff des Anspruchs 11 und eine Blasmaschine gemäß dem Oberbegriff des Anspruchs 15.

Aus der DE 28 46 304 A1 ist es ferner bekannt, im Rahmen von Versuchsreihen zur Optimierung der Vorwärmung von Vorformlingen für das anschließende Streckblasen gitterförmige Markierungen an den Vorformlingen anzubringen und diese nach dem Streckblasen der Behälter zu beobachten, um eine Materialverteilung in der hergestellten Behälterwand abzuschätzen. Für die laufende Produktionskontrolle wurden derartige Markierungen jedoch bisher als zu aufwändig und nicht ausreichend reproduzierbar angesehen. Stattdessen kommen beispielsweise Infrarottransmissionsmessungen an den erzeugten Behälterwänden zum Einsatz.

Aus der EP 07 93569 D1 ist ferner die Maschinensteuerung von Blasmaschinen in Abhängigkeit von Ergebnissen bei der Inspektion der erzeugten Kunststoffbehältern bekannt, beispielsweise durch Inspektion auf Defekte in den Flaschenwänden.

Es besteht demgegenüber der Bedarf für Verfahren zur Produktionskontrolle beim Streckblasen von Kunststoffbehältern, mit dem sich aussagekräftige Prüfzyklen zur Wanddickenverteilung möglichst flexibel und mit geringer Beeinträchtigung laufender Produktionszyklen realisieren lassen.

Die gestellte Aufgabe wird mit einem Verfahren zur Produktionskontrolle beim Streckblasen von Kunststoffbehältern in einer Blasmaschine nach dem Anspruch 1 gelöst. Demnach umfasst das erfindungsgemäße Verfahren die Schritte: a) Einschleusen wenigstens eines mit einem insbesondere regelmäßigen und/oder äquidistanten Testmuster bedruckten Testvorformlings in einen in die Blasmaschine einlaufenden Strom aus Produktvorformlingen; b) Blasen der Produktvorformlinge und des Testvorformlings im kontinuierlichen Betrieb der Blasmaschine zu Produktbehältern und zu einem Testbehälter; und c) Abbilden des Testmusters auf dem Testbehälter mit wenigstens einer Kamera.

Die Produktbehälter sind aus den Produktvorformlingen hergestellte und zum Gebrauch bestimmte Kunststoffbehälter, beispielsweise Getränkeflaschen oder dergleichen. Die Blasmaschine ist beispielsweise eine Streckblasmaschine vom Rundläufertyp. Die Produktvorformlinge sind vorzugsweise aus PET. Der Testvorformling ist ein mit wenigstens einem optisch auswertbaren Testmuster bedruckter Produktvorformling, beispielsweise mittels Direktdruck, Tintenstrahldruck, Offsetdruck, Tampondruck oder Siebdruck.

Unter einem regelmäßigen Testmuster ist zu verstehen, dass das Muster einer überprüfbaren Regel folgt, derart dass sich Abweichungen von der Regel Bild gebend feststellen lassen. Derartige Regeln können durch geometrische Figuren, wiederkehrend auf der Oberfläche des Testvorformlings verteilten Punkten und/oder Linien oder dergleichen bestehen. Unter einem äquidistanten Testmuster ist zu verstehen, dass Gitterpunkte, Gitterlinien, Kreislinien oder dergleichen auf dem Testvorformling mit konstanten oberflächlichen Abständen vorhandenen sind.

Derartige Regeln können auch darin bestehen, dass der Ort und der Verlauf einzelner Testmerkmale auf dem Testvorformling bekannt sind, beispielsweise in Form eines diagonal auf der Oberfläche verlaufenden Strichs mit geeigneter Linienbreite, derart dass sich eine Verzerrung des Strichs beim Blasen optisch erkennen und im Kamerabild auswerten lässt. Dies wäre zum Beispiel der Fall bei einer mit konstanter Linienbreite aufgedruckten Linie, die sich auf dem geblasenen Behälter verjüngt und/oder in eine bestimmte Richtung verbogen ist.

Das Testmuster wird beim Blasen des Testbehälters gedehnt und je nach lokaler Verstreckung darunter liegender Wandbereiche verzerrt. Ausgehend von dem, insbesondere regelmäßigen und/oder äquidistanten, Testmuster auf dem Testvorformling erlaubt die lokale Dehnung des Testmusters einen mit optischen Mitteln einfach zu ermittelnden Rückschluss über die Reduzierung der Wanddicke des jeweils darunter liegenden Wandbereichs und über die Wanddickenverteilung entlang der mit dem Testmuster versehenen Behälterwand.

Unter dem kontinuierlichen Betrieb der Blasmaschine ist zu verstehen, dass diese unter realistischen Produktionsbedingungen mit wenigstens einem Testvorformling beschickt wird, beispielsweise im direkten Anschluss an einen Produktionszyklus zur kontinuierlichen Verarbeitung von Produktvorformlingen. Die Blasmaschine kann dabei auch getaktet arbeiten und muss somit nicht zwingend ein sich kontinuierliches drehendes Blaskarussell umfassen. Beispielsweise wird der Testvorformling dann im normalen Arbeitstakt der Blasmaschine eingeschleust.

Das Abbilden des Testbehälters erfolgt vorzugsweise im Auflicht. Es wäre auch denkbar, ein Hellfeld hinter dem Testmuster zu erzeugen, beispielsweise indem ein Streumittel im Inneren des Testbehälters und/oder Testvorformlings bereit gestellt und beleuchtet wird. Die Beleuchtung erfolgt dann beispielsweise durch die Behältermündung. Das Streumittel kann beispielsweise durch einen beim Entspannen des Blasdrucks im fertig geblasenen Behälter entstehenden Nebel ausgebildet sein.

Die Kamera erzeugt pro Testbehälter wenigstens einen Bilddatensatz, der sich in einem zugeordneten Rechner oder dergleichen auswerten lässt. Die Abbildung des Testmusters ermöglicht eine zweidimensionale Qualitätskontrolle des zugehörigen Wandbereichs. Die Auswertung erfolgt vorzugsweise durch Vermessen wenigstens eines Teilbereichs des beim Blasen gedehnten Testmusters. Es können mehrere Kameras vorhanden sein, beispielsweise in Kombination mit einem Spiegelkabinett, um unterschiedliche Wandbereiche der Testbehälter mit dem gedehnten Testmuster abzubilden und gemeinsam auszuwerten.

Vorzugsweise wird auch das Testmuster auf dem Testvorformling Bild gebend registriert. Damit lässt sich jedem Testbehälter ein individuelles Referenzbild des regelmäßigen Testmusters zuordnen. Vorzugsweise wird das Testmuster dann sowohl einlaufseitig als auch auslaufseitig vermessen. Durch einen derartigen individuellen Rückbezug auf den jeweiligen Testvorformling lassen sich Ungenauigkeiten bei der Herstellung des Testmusters auf dem Testvorformling kompensieren.

Vorzugsweise wird der Testvorformling an einer vorgegebenen Produktstromposition in den einlaufenden Strom eingeschleust. Dadurch lassen sich vorgegebene Blaskavitäten und/oder Heizelemente gezielt und selektiv mit Testvorformlingen beschicken. Dies ermöglicht sowohl die Nachverfolgung des Testvorformlings und/oder des Testbehälters innerhalb des Produktstroms als auch eine zuverlässige Zuordnung erzeugter Kamerabilder zu den überprüften Testbehältern und/oder Testvorformlingen.

Ebenso können die Testvorformlinge im Sinne eines Trial-And-Error-Verfahrens kontinuierlich eingeschleust und/oder erzeugt werden und Produktionsparameter, beispielsweise der Blasmaschine, so lange verändert werden, bis vorgegebene Qualitätskriterien an den geblasenen Testbehältern Bild gebend festgestellt werden, beispielsweise zur Produktionsfreigabe. Besonders hilfreich ist ein derartiges Vorgehen bei einem Produktionsstart und/oder Wechsel auf einen neuartigen Behältertyp.

Vorzugsweise wird dem Testbehälter eine zum Blasen des Testbehälters verwendete Blaskavität der Blasmaschine zugeordnet und/oder ein zum insbesondere individuellen Erwärmen des Testvorformlings verwendetes Heizelement. Dies ermöglicht eine individuelle Funktionskontrolle der Blaskavitäten und/oder der Heizelemente. Letztere sind beispielsweise zum Erwärmen einzelner Vorformlinge ausgebildete Heizkammern und/oder Heizdorne. Anhand des Testbehälters lassen sich folglich die jeweils verwendeten Einrichtungen zum Vorwärmen und/oder Blasen individuell optimieren.

Vorzugsweise wird das abgebildete Testmuster des Testbehälters mittels Bildauswertung vermessen und/oder mit wenigstens einem Referenzmuster verglichen. Dazu eignen sich beispielsweise Bildauswertealgorithmen an sich bekannter und entsprechend leistungsfähiger Bildverarbeitungsbibliotheken. Mit Hilfe der Bildauswertung lässt sich das Testmuster vergleichsweise schnell hinsichtlich charakteristischer durch die Verstreckung der einzelnen Wandabschnitte erzeugter Verzerrungen untersuchen. Die Bildauswertung ermöglicht insbesondere eine flächige Auswertung des abgebildeten Wandbereichs. Im Gegensatz zur Wanddickenmessung basierend auf einer Strahlungstransmission durch einzelne Wandabschnitte spielen optische Störeinflüsse, wie sie beispielsweise durch Formnähte entstehen, und/oder Ungenauigkeiten der Messposition nur eine untergeordnete Rolle, solange das Testmuster erkannt wird.

Bereits anhand einzelner Kamerabilder lassen sich aussagekräftige Ergebnisse hinsichtlich der Wandverstreckung in Längsrichtung des erzeugten Behälters, in umfänglicher Richtung des Behälters und/oder in einem Bodenbereich des Behälters erzielen. Besonders vorteilhaft sind die Mittel der Bildverarbeitung wegen der damit ermöglichten Produktstromgeschwindigkeiten von bis zu 10 m/s. Beispielsweise können Positionierungsungenauigkeiten und dadurch verursachte optische Musterverformungen mittels Bild verarbeitender Analyse korrigiert werden. Vorzugsweise wird wenigstens ein Maschinenparameter zum Erwärmen und/oder Blasen der Produktvorformlinge in Abhängigkeit eines mittels der Bildauswertung gewonnenen Ergebnisses überprüft und/oder eingestellt. Dies ermöglicht eine schnelle Rückkopplung zur Optimierung der Produktqualität während des laufenden Produktionsbetriebs. Beispielsweise lassen sich einzelne Maschinenparameter anhand charakteristischer Verzerrungen des insbesondere regelmäßigen und/oder äquidistanten Testmusters gezielt variieren. Derartige Maschinenparameter sind beispielsweise die Temperatur und Dauer der Vorwärmung der Produktvorformlinge, der Vorblasdruck oder dergleichen.

Vorzugsweise wird der Maschinenparameter individuell für eine zum Blasen des Testbehälters verwendete Blaskavität überprüft und/oder eingestellt. Dies ermöglicht eine einheitliche Produktqualität für alle an der Blasmaschine vorhandene Blaskavitäten. Beispielsweise lassen sich individuelle Abweichungen von Sollwerten und Istwerten einzelner Blasparameter für die jeweiligen Blaskavitäten gezielt kompensieren. Dies gilt analog für individuelle regelbare Heizelemente und deren Heizparameter.

Vorzugsweise wird die verwendete Blaskavität nach einem Überschreiten einer zulässigen Abweichung des Maschinenparameters von einem Sollwert selektiv mit wenigstens einem weiteren Testvorformling beschickt. Beispielsweise können einzelne Blaskavitäten je nach Ausmaß der Abweichung, Fehlerhäufigkeit und/oder Fehlerwahrscheinlichkeit gezielt und selektiv mit Testvorformlingen beschickt werden. Dies reduziert den Aufwand für die Optimierung der Blasmaschine insgesamt, beispielsweise indem lediglich an nicht ordnungsgemäß arbeitenden Blaskavitäten zusätzliche Kontrollbeschickungen nötig sind. Dem gegenüber kann die Produktionskontrolle an ordnungsgemäß arbeitenden Blaskavitäten auf ein routinemäßig gefordertes Mindestmaß reduziert werden.

Vorzugsweise wird der Testvorformling aus einer zu verarbeitenden und zu überwachenden Charge der Produktvorformlinge entnommen und mit dem Testmuster bedruckt. Damit lassen sich Schwankungen der Materialbeschaffenheit und/oder der Abmessungen der Produktvorformlinge zwischen einzelnen Chargen bei der erfindungsgemäßen Produktionskontrolle kompensieren. Beispielsweise können die Produktvorformlinge in einer der Blasmaschine zugeordneten Spritzgussmaschine hergestellt werden und mit einem zugeordneten Druckwerk, beispielsweise mittels Tintenstrahldruck, direkt bedruckt werden. Dies gewährleistet insbesondere, dass die Produktvorformlinge und die Testvorformlinge hinsichtlich des Wandmaterials und der Abmessungen im Wesentlichen identisch sind.

Vorzugsweise wird der Testbehälter, insbesondere wenigstens ein Testbehälter pro an der Blasmaschine ausgebildeter Blaskavität, automatisch nach Produktion einer vorgegebenen Behältermenge und/oder nach Ablauf einer vorgegebenen Produktionszeit kontrolliert. Es lassen sich somit automatisch Produktionszyklen und Prüfzyklen aneinanderreihen. Dies dient einer Maximierung der zur Verfügung stehenden Produktionskapazität und/oder einer Dokumentation der Produktions- und Produktqualität

Die gestellte Aufgabe wird ferner mit einem Testvorformling zum Durchführen des erfindungsgemäßen Verfahrens gelöst. Demnach entspricht der Testvorformling bezüglich seines Wandmaterials und seiner Abmessungen einem Produktvorformling, wobei auf dem Testvorformling ferner ein insbesondere regelmäßiges und/oder äquidistantes Testmuster aufgedruckt ist. Dies ermöglicht zum Einen ein teilungsgenaues Einschleusen des Testvorformlings an Stelle eines Produktvorformlings. Zum Anderen lässt sich aus den mit den Testvorformlingen gewonnenen Kontrollergebnissen direkt auf die zu erwartende Produktqualität der im Produktstrom vorhandenen Produktvorformlinge schließen.

Erfindungsgemäß gewonnene Kontrollergebnisse lassen sich mittels elektronischer Datenverarbeitung in an sich bekannter Weise dokumentieren. Hierfür nützliche Daten umfassen beispielsweise Benutzerkennung, Zeitstempel, zugeordnetes Heizelement, zugeordnete Blaskavität, weitere zugeordnete Behandlungsaggregate, verschlüsselte Kontrollnummer sowie Kamerabild des Testbehälters. Ebenso möglich wäre ein Bedrucken des Testbehälters mit Kontrollergebnissen. Diese lägen dann als Vergleichsergebnis bei einer separaten Nachkontrolle vor, beispielsweise wenn Behälter zerteilt, vermessen und/oder gewogen werden.

Das erfindungsgemäße Testmuster wird durch das Verstrecken der einzelnen Wandabschnitte des Testvorformlings beim Streckblasen gedehnt und insbesondere verzerrt und erlaubt auf diese Weise eine einfache und zuverlässige Abschätzung der jeweiligen Wanddicke und insbesondere Wanddickenverteilung in Abhängigkeit von dem Verzerrungsgrad des beispielsweise regelmäßigen und/oder äquidistanten Testmusters. Unter regelmäßigen Mustern sind beispielsweise definierte geometrische Figuren und/oder Gruppen geometrischer Figuren zu verstehen, wie Punktraster, Linien, Rechtecke, Kreise, Ellipsen oder dergleichen. Ebenso denkbar sind flächige teiltransparente Muster, die beispielsweise mit vorgegebenem und örtlich konstantem Transparenzgrad aufgedruckt werden. Die Verstreckung beim Blasen ließe sich dann durch Änderung des örtlichen Transparenzgrads, also den Unterschied des Transparenzgrads zwischen vor und nach dem Blasen, feststellen.

Vorzugsweise ist das Testmuster auf dem Bodenbereich des Testvorformlings in Form konzentrischer Ringe oder Ringsegmente aufgedruckt, die dann insbesondere äquidistant zueinander ausgebildet sind. Und/oder das Testmuster ist in einem Seitenwandbereich des Testvorformlings in Form eines Rasters aufgedruckt, das insbesondere in Längsrichtung und/oder Umfangsrichtung des Testvorformlings äquidistant ist. Damit lässt sich im Bodenbereich eine unerwünschte asymmetrische Verstreckung hinsichtlich der Längsachse und/oder des Querschnitts des geblasenen Behälters auf besonders einfache und zuverlässige Weise erkennen und auswerten. Ein im Wesentlichen in der Abwicklung der Behältermantelfläche orthogonales Raster ermöglicht eine einfache und aussagekräftige Abschätzung der Wanddickenverteilung im seitlichen Bereich des Behälters. Das Testmuster ist vorzugsweise vollumfänglich und/oder rotationssymmetrisch bezüglich der Hauptachse des Testvorformlings ausgebildet. Dies erhöht die Aussagekraft einzelner Kamerabilder des beim Streckblasen verzerrten äquidistanten Testmusters, insbesondere bei teilumfänglicher Abbildung des Testbehälters.

Vorzugsweise enthält das Testmuster einen Fluoreszenzfarbstoff und ist bei Beleuchtung im sichtbaren Spektralbereich, beispielsweise mit Tageslicht, für das menschliche Auge unsichtbar. Der Testbehälter kann dann als für den Gebrauch bestimmter Produktbehälter im Produktstrom verbleiben, vorausgesetzt das Kontrollergebnis entspricht an den Testbehälter gestellten Prüfkriterien. Anders gesagt unterscheidet sich der Testbehälter beim ordnungsgemäßen Gebrauch dann nicht von einem Produktbehälter.

Vorzugsweise umfasst der erfindungsgemäße Testvorformling ferner einen Aufdruck oder anderweitige Markierung zur Identifizierung des Testvorformlings und/oder des daraus geblasenen Testbehälters. Der Testvorformling und/oder der Testbehälter lassen sich dann an beliebigen Abschnitten der Förderbahn der Vorformlinge identifizieren und/oder ihre Position im Produktstrom ermitteln.

Die gestellte Aufgabe wird ebenso mit einer Blasmaschine zum Durchführen des erfindungsgemäßen Verfahrens nach Anspruch 15 gelöst. Demnach umfasst diese eine getaktete Einschleusvorrichtung, mit der sich der erfindungsgemäße Testvorformling, insbesondere auf nachverfolgbare Weise, in den einlaufenden Strom aus Produktvorformlingen einschleusen lässt, um eine an der Blasmaschine ausgebildete Blaskavität, insbesondere gezielt, gezielt mit dem Testvorformling zu beschicken, und wenigstens eine Kamera zum Abbilden des in der Blaskavität geblasenen Testbehälters. Die Einschleusvorrichtung und die Kamera ließen sich im Einlaufbereich und im Auslaufbereich bestehender Blasmaschinen prinzipiell auch nachrüsten.

Eine bevorzugte Ausführungsform der Erfindung ist in der Zeichnung dargestellt. Es zeigen:
- Figur 1: eine erfindungsgemäße Vorrichtung zur Herstellung und Kontrolle geblasener Behälter;
- Figur 2: einen erfindungsgemäßen Testvorformling; und
- Figur 3: einen erfindungsgemäßen Testbehälter.

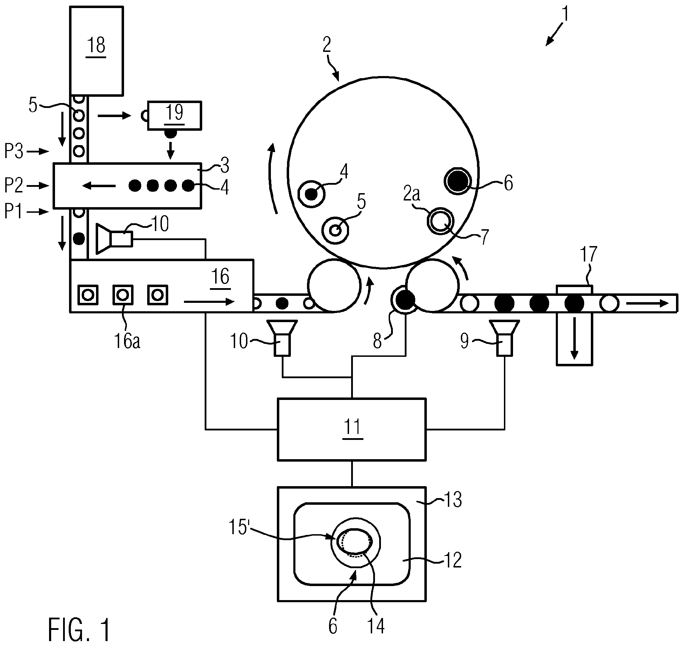

Wie die Figur 1 erkennen lässt, umfasst eine erfindungsgemäße Vorrichtung 1 zur Produktionskontrolle beim Streckblasen von Kunststoffbehältern eine Blasmaschine 2 eine Einschleusvorrichtung 3 zum Einschleusen von Testvorformlingen 4 in einen einlaufenden Strom aus Produktvorformlingen 5, die in der Blasmaschine 2 zu Testbehältern 6 und Produktbehältern 7 in an sich bekannter Weise im Streckblasverfahren oder dergleichen hergestellt werden. Ferner ist wenigstens eine Kamera 8, 9 zur Bild gebenden Kontrolle der in der Blasmaschine 2 hergestellten Testbehälter 6 vorhanden. In gezeigtem Beispiel ist eine erste auslaufseitige Kamera 8 unterhalb des vorbeilaufenden gemischten Behälterstroms aus Testbehältern 6 und Produktbehältern 7 ausgebildet, um den Behälterboden 6a der Testbehälter 6 von unten abzubilden. Ferner ist eine zweite auslaufseitige Kamera 9 zum Abbilden der Testbehälter 6 in seitlicher Ansicht vorhanden. Handhabung und Transport der Vorformlinge und Behälter in der erfindungsgemäßen Vorrichtung 1 können auf an sich bekannte Weise erfolgen und werden daher nicht weiter erläutert.

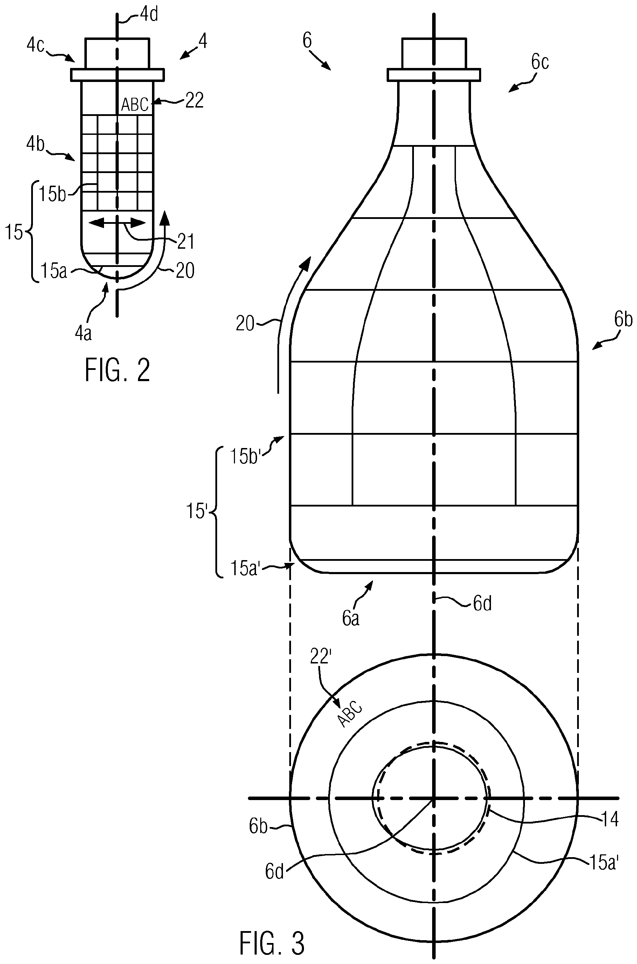

Vorzugsweise ist ferner wenigstens eine einlaufseitige Kamera 10 vorhanden, mit der sich die Testvorformlinge 4 beispielsweise in seitlicher Ansicht abbilden lassen. Die auslaufseitigen Kameras 8, 9 und die wenigstens eine einlaufseitige Kamera 10 sind an eine Auswerteeinheit 11 angeschlossen, die eine Produktionskontrolle mittels Bildauswertung mit den Kameras 8, 9, 10 aufgenommener Kamerabilder 12 ermöglicht. Im gezeigten Beispiel ist ein Kamerabild 12 des mit der auslaufseitigen ersten Kamera 8 aufgenommenen Testbehälters 6 auf einem Bildschirm 13 gemeinsam mit einem in der Auswerteeinheit 11 erzeugten Referenzmuster 14 dargestellt. Dieses dient als Vergleichskriterium für ein Testmuster 15' auf dem Testbehälter 6, das durch Verstrecken eines insbesondere regelmäßigen und/oder äquidistanten Testmusters 15 auf dem Testvorformling 4 beim Blasen des Testbehälters 6 entsteht. Die Beschaffenheit des Testmusters 15 wird ausführlich unter Bezugnahme auf die Figuren 2 und 3 beschrieben.

Die Produktvorformlinge 5 und Testvorformlinge 4 werden für das anschließende Blasen in der Blasmaschine 2 in einem Ofen 16 erwärmt. Vorzugsweise ist ferner eine Ausschleusvorrichtung 17 vorhanden, mit der sich die Testbehälter 6 aus dem auslaufenden Produktstrom der geblasenen Produktbehälter 7 aussondern lassen.

Weitere optionale Komponenten sind eine Spritzgussmaschine 18 zum Herstellen der Produktvorformlinge 5 und ein Drucker 19 zum Bedrucken einzelner Produktvorformlinge 5 mit dem Testmuster 15. Mit dem Drucker 19 lassen sich Testvorformlinge 4 aus einer mit der Spritzgussmaschine 18 hergestellten Charge von Produktvorformlingen 5 herstellen, um diese Charge gezielt zu kontrollieren. Es wäre allerdings auch möglich, die Testvorformlinge 5 als separat gefertigte Testkörper bereit zu stellen, beispielsweise falls die Spritzgussmaschine 18 nicht vorhanden ist und/oder als Zubehör zu einer bereitgestellten Charge von Produktvorformlingen 5.

Die Einschleusvorrichtung 3 arbeitet getaktet derart, dass die Produktstrompositionen P2 eingeschleuster Testvorformlinge 4 im einlaufseitigen Strom der Produktvorformlinge 5 bekannt und nachverfolgbar sind. Im gezeigten Beispiel wird ein Testvorformling 4 an der Produktstrompositionen P2 zwischen Produktstrompositionen P1, P3 von Produktvorformlingen 5 eingeschleust. Somit lassen sich einzelne Blaskavitäten 2a der Blasmaschine 2 und/oder einzelne Heizelemente 16a des Ofens 16 gezielt mit Testvorformlingen 4 beschicken. Die Heizelemente 16a sind beispielsweise Heizkammern und/oder Heizdorne für je einen Vorformling. Durch Bildauswertung der Kamerabilder 12 lassen sich somit einzelne Blaskavitäten 2a und/oder Heizelemente 16a hinsichtlich der damit erzeugten Produktqualität selektiv überprüfen, insbesondere um bei ungenügender Produktqualität deren Maschinenparameter selektiv oder für die gesamte Maschine zu korrigieren.

Die Produktstromposition P2 einzelner Testvorformlinge 4 und/oder Testbehälter 6 ließe sich auch durch deren Identifizierung in den Kamerabildern 12 der Kameras 8, 9, 10 ermitteln und/oder kontrollieren. Die Bild gebende Identifizierung ermöglicht dann ferner eine Zuordnung zu separaten Qualitätskontrollen an ausgeschleusten Testbehältern 6, beispielsweise durch deren ergänzendes Vermessen außerhalb der erfindungsgemäßen Vorrichtung 1.

Die Figur 2 zeigt in einer schematischen Seitenansicht einen erfindungsgemäßen Testvorformling 4 mit dem Testmuster 15, das beispielsweise in Form konzentrischer Ringe 15a im Bodenbereich 4a des Testvorformlings 4 und in Form eines Gittermusters 15b in einem Seitenwandbereich 4b des Testvorformlings 4 ausgebildet ist. Wie die Figur 2 ferner erkennen lässt, ist das Testmuster 15 in einem sich beim Blasvorgang verstreckenden Bereich unterhalb eines schematisch angedeuteten Tragrings 4c ausgebildet. Angedeutet ist ferner eine Hauptachse 4d des Testvorformlings 4, um die die Ringe 15a oder funktionell vergleichbare Ringsegmente (nicht dargestellt) konzentrisch ausgebildet sind. Vorzugsweise sind die Ringe 15a ferner, bezogen auf die äußere Oberfläche des Testvorformlings, äquidistant zueinander ausgebildet. Vorzugsweise ist insbesondere das Gittermuster 15b äquidistant ausgebildet. Darunter ist zu verstehen, dass die Abstände zwischen Gitterpunkten oder Gitterlinien in Längsrichtung 20 und/oder in umfänglicher Richtung 21 in konstanten oberflächlichen Abständen zueinander aufgedruckt sind. Prinzipiell eignen sich aber auch andere Testmuster 15, sofern sie auf optischem Wege überprüfbaren Regeln folgen, wie beispielsweise geometrische Figuren.

Der Testvorformling 4 entspricht vorzugsweise mit Ausnahme des Testmusters 15 und einer optionalen Identifikationsmarke 22 dem Produktvorformling 5. Darunter ist zu verstehen, dass die Produktvorformlinge 5 und die zur Produktionskontrolle verwendeten Testvorformlinge 4 hinsichtlich ihre Abmessungen und Wandmaterialien im Wesentlichen identisch sind. Der Testvorformling 4 ermöglicht dann eine besonders realistische Aussage über die Verstreckung der Produktvorformlinge 5 beim Blasprozess. Das Testmuster 15 und die optionale Identifikationsmarke 22 werden auf den Testvorformling 4 aufgedruckt, beispielsweise mittels Direktdruck, Tintenstrahldruck Offsetdruck, Tampondruck, Siebdruck oder dergleichen. Das Bedrucken ermöglicht gleichermaßen reproduzierbare und flexibel an bestimmte Prüfkriterien anpassbare Testmuster 15.

In der Figur 3 ist schematisch ein Testbehälter 6 dargestellt, der aus dem Testvorformling 4 der Figur 2 durch Streckblasen hergestellt wurde. Demnach wird das regelmäßige Testmuster 15 auf dem Testvorformling 4 durch den Blasprozess und das damit verbundene Verstrecken einzelner Wandbereiche in ein verzerrtes Testmuster 15' aufgedehnt. Beispielsweise unterscheiden sich die Abstände zwischen einzelnen Gitterlinien oder Gitterpunkten in Längsrichtung 20 im verstreckten rasterförmigen Testmuster 15b' gegenüber dem äquidistanten Testmuster 15b auf dem Testvorformling 4. Wie ferner eine Ansicht des Behälterbodens 6a des Testbehälters 6 verdeutlicht, können die konzentrischen Kreisringe 15a auf dem Testvorformling 4 durch den Blasprozess zu bezüglich der abgebildeten Umfangslinie und/oder der Hauptachse 6d des Testbehälters 6 verzerrten, insbesondere asymmetrisch deformierten Ringen 15a' verstreckt sein. Die Verteilung einzelner Linien oder Punkte des Testmusters 15' gibt Aufschluss über die jeweilige Verteilung des Wandmaterials und damit die Verteilung der lokalen Wandstärke des Testbehälters 6.

Die Auswertung des verstreckten Testmusters 15' erfolgt vorzugsweise in einer Recheneinheit 11 mit einem geeigneten Bildverarbeitungsprogramm oder dergleichen. Beispielhaft ist in der Figur 3 ein über die Behälteransicht projiziertes Referenzmuster 14 dargestellt, das beispielsweise konzentrisch zur von der Blaskavität 2a reproduzierbar vorgegebenen äußeren Umfangslinie des Testbehälters 6 im Rahmen der Bildauswertung festgelegt wird. Im Beispiel wäre eine im Wesentlichen konzentrische Verteilung einzelner Ringe 15a' erwünscht.

Das erfindungsgemäße Verfahren eignet sich jedoch nicht nur für rotationssymmetrische Behälter sondern auch für polygonale und/oder elliptische Querschnitte. Geeignete Referenzmuster und Sollkriterien lassen im Rahmen der Bildauswertung auf flexible Weise vorgeben. Beispielsweise können an den jeweiligen Behälterquerschnitt angepasste konzentrische Testmuster 15 verwendet werden und die daraus hergestellten, gedehnten Testmuster 15' mit entsprechenden Referenzmustern verglichen werden.

Sollkriterien für die Qualitätskontrolle sind beispielsweise Soll-Bildbereiche, innerhalb der bestimmte charakteristische Bestandteile, wie beispielsweise einzelne Gitterpunkte oder Linien, des verstreckten Testmusters 15' im Kamerabild 12 liegen sollten. Davon abgeleitete Sollkriterien sind beispielsweise Mindestanforderungen an die Wanddicke und/oder die Schwankungsbreite der lokalen Wanddicken in den untersuchten Wandabschnitten.

Auf Grund der Nachverfolgbarkeit der Produktstromposition P2 einzelner Testvorformlinge 4 und der daraus geblasenen Testbehälter 6 lässt sich feststellen, mit welcher Blaskavität 2a und/oder mit welchem Heizelement 16a ordnungsgemäße bzw. nicht ordnungsgemäße Testbehälter 6 hergestellt wurden. Folglich können Maschinenparameter der Blasmaschine 2 und/oder des Ofens 16 gezielt verändert werden, um das Produktionsergebnis einer bestimmten Blaskavität 2a und/oder eines bestimmten Heizelements 16a zu korrigieren. Das Produktionsergebnis nach Änderung wenigstens eines Maschinenparameters der Blasmaschine 2 und/oder des Ofens 16 lässt sich dann durch wiederholtes Beschicken der/des zu optimierenden Blaskavität 12a und/oder Heizelements 16a kontrollieren, gegebenenfalls so lange, bis ein zugehöriger Testbehälter 6 mit der gewünschten Produktqualität festgestellt wird.

Es lassen sich somit individuelle Prüfzyklen für einzelne Blaskavitäten 2a und/oder Heizelemente 16a durchführen. Dies ist insbesondere während einer fortlaufenden Produktion von Produktbehältern 7 in den übrigen Blaskavitäten 2a möglich. Durch das nachverfolgbare Zuordnen einzelner Testvorformlinge 4 und Testbehälter 6 zu den beschickten Blaskavitäten 2a und/oder Heizelementen 16a kann die Produktqualität bei gleichzeitig größtmöglicher Produktionsleistung der Blasmaschine 2 optimiert werden.

Nichts desto weniger lassen sich vorgegebene Prüfzyklen, die dann beispielsweise für alle Blaskavitäten 2a der Blasmaschine 2 gruppenweise durchgeführt werden, nach dem Ablauf einer vorgegebenen Zeitspanne und/oder nach der Produktion einer vorgegebenen Behältermenge automatisch zwischen Produktionszyklen einfügen. Zu diesem Zweck ist dann lediglich eine ausreichende Anzahl von Testvorformlingen 4 in den einlaufenden Strom der Produktvorformlinge 5 einzuschleusen und erfindungsgemäß auszuwerten.

Liegen die Prüfergebnisse für alle Blaskavitäten 2a der Blasmaschine 2 innerhalb vorgegebener Sollbereiche der untersuchten Testparameter, werden die jeweiligen Blaskavitäten 2a wieder mit Produktvorformlingen 5 beschickt. Werden für einzelne Blaskavitäten 2a nicht ordnungsgemäße Abweichungen von den Sollwerten festgestellt, so lassen sich diese Blaskavitäten 2a selektiv so lange mit Testvorformlingen 4 beschicken, bis durch Korrektur geeigneter Maschinenparameter der Blasmaschine 2 und/oder des Ofens 16 eine gewünschte Produktqualität für die betroffenen Blaskavitäten 2a und/oder Heizelemente 16a festgestellt wird.

Die Testbehälter 6 werden vorzugsweise mit einer Ausschleusvorrichtung 17 gezielt aus dem auslaufenden Produktstrom ausgesondert. Die ausgeschleusten Testbehälter 6 können dann zusätzlich vermessen und/oder dokumentiert werden. Es ist jedoch auch denkbar, das Testmuster 15 mittels für das menschliche Auge unter normalen Gebrauchsbedingungen nicht sichtbarer Tinte oder dergleichen aufzudrucken. Geeignet zu diesem Zweck sind beispielsweise Fluoreszenzfarbstoffe, die sich mit ultravioletter Strahlung anregen und mit den Kameras 8, 9, 10 detektieren lassen. Ebenso denkbar wäre ein Farbstoff, der im Anschluss an das erfindungsgemäße Kontrollverfahren ausbleicht, beispielsweise mittels geeigneter UV-Bestrahlung oder dergleichen. Das Testmuster 15' wäre dann beim späteren Gebrauch des Behälters für das menschliche Auge nicht mehr sichtbar.

Ergänzend zu dem Testmuster 15 könnte auf den Testvorformlingen 4 eine Identifikationsmarke 22 vorgesehen sein, beispielsweise eine Zeichenfolge und/oder ein maschinenlesbarer Strichcode oder dergleichen. Es wäre auch denkbar die Identifizierungsmarke 22 derart auszubilden, dass sie insbesondere nach dem Blasen des Testbehälters 6 gelesen werden kann, beispielsweise in Form einer durch das Blasen modifizierten Identifikationsmarke 22'. In diesem Fall ließe sich die Produktstromposition P2 einzelner Testvorformlinge 4 und/oder Testbehälter 6 auch mit den Kameras 8, 9, 10 feststellen, um diese einzelnen Blaskavitäten 2a und/oder Heizelementen 16a zuzuordnen. Allerdings bietet das gezielte Eintakten der Testvorformlinge 4 mit Hilfe der Einschleusvorrichtung 3 in den einlaufenden Produktstrom den Vorteil, dass einzelne Blaskavitäten 2a und Heizelemente 16a gezielt und selektiv mit den Testvorformlingen 4 beschickt werden können und eine Bildauswertung nur selektiv an Testbehältern 6 nötig ist.

Das erfindungsgemäße Kontrollverfahren lässt sich vorzugsweise bei Produktionsumstellungen, Chargenwechseln im Rahmen routinemäßiger Prüfzyklen und/oder in Abhängigkeit von stromabwärts der Blasmaschine 2 ermittelten Inspektionsergebnissen durchführen.

Die Anzahl der in der Figur 1 zu diesem Zweck eingesetzten Kameras 8, 9, 10 ist lediglich beispielhaft. Ebenso wäre es denkbar, an einer Inspektionsposition, beispielsweise der in der Figur 1 dargestellten Kamera 9, wenigstens zwei Kameras anzuordnen, die die Testbehälter 6 in einander ergänzenden Teilansichten abbilden. Ebenso ließen sich Kameras zur Abbildung des Behälterbodens 6a von unten und zur Abbildung ausgewählter Seitenwandbereicht 6b an einer Inspektionsposition kombinieren, beispielsweise an der in der Figur dargestellten Position der Kamera 8. Ebenso wäre es prinzipiell ausreichend, eine der in der Figur 1 gezeigten einlaufseitigen Kameras 10 zu verwenden, insbesondere in einer Inspektionsposition vor dem Ofen 16.

Die Verwendung einzelner Heizelemente 16a für je einen Produktvorformling 5 oder Testvorformling 4 ist nicht zwingend erforderlich. Es könnte in an sich bekannter Weise eine Heizstrecke vorgesehen sein, die von allen Produktvorformlingen 5 und Testvorformlingen 4 durchlaufen wird. Ebenso könnte der Ofen 16 als Karussellofen mit einzelnen Heizelementen 16, insbesondere mit einzelnen Heizkammern und/oder Heizstäben zum Beheizen der Vorformlinge von innen, für die Produktvorformlinge 5 und die Testvorformlinge 4 ausgebildet sein.

Für das Testmuster 15 eignen sich generell beliebige definierte zweidimensionale Strukturen beispielsweise flächige Strichcodes, Kreise, Ellipsen, Rechtecke, Dreiecke, Punktraster, regelmäßige Wellen oder dergleichen.

Die auslaufseitige Kontrolle der Testbehälter 6 könnte beispielsweise durch Beleuchten eines beim Druckabfall in den geblasenen Behältern entstehenden Nebels unterstützt werden. Derartige Nebel begünstigen eine gleichmäßige Ausleuchtung des Behälterinneren.

## Patentansprüche

1. Verfahren zur Produktionskontrolle beim Streckblasen von Kunststoffbehältern in einer Blasmaschine (2), mit den Schritten:
a) Einschleusen wenigstens eines mit einem, insbesondere regelmäßigen und/oder äquidistanten
bedruckten Testvorformlings (4) mit Testmuster in einen in die Blasmaschine einlaufenden Strom aus Produktvorformlingen (5);
b) Blasen der Produktvorformlinge und des Testvorformlings im kontinuierlichen Betrieb der Blasmaschine zu Produktbehältern (7) und zu einem Testbehälter (6); und
c) Abbilden des Testmusters (15') auf dem Testbehälter mit wenigstens einer Kamera (8, 9),
das Verfahren ist **gekennzeichnet dadurch, dass** die Testmuster bedruckt sind.

2. Verfahren nach Anspruch 1, wobei ferner das Testmuster (15) auf dem Testvorformling (4) Bild gebend registriert wird.

3. Verfahren nach Anspruch 1 oder 2, wobei der Testvorformling (4) an einer vorgegebenen Produktstromposition (P2) in den einlaufenden Strom der Produktvorformlinge (5) eingeschleust wird.

4. Verfahren nach einem der vorigen Ansprüche, wobei dem Testbehälter (6) eine Blaskavität (2a) der Blasmaschine (2) zum Blasen des Testbehälters und/oder ein Heizelement (16a) zum Erwärmen des Testvorformlings (4) zugeordnet werden/wird.

5. Verfahren nach wenigstens einem der vorigen Ansprüche, wobei das abgebildete Testmuster (15') des Testbehälters (6) mittels Bildauswertung vermessen und/oder mit wenigstens einem Referenzmuster (14) verglichen wird.

6. Verfahren nach Anspruch 5, wobei wenigstens ein Maschinenparameter zum Erwärmen und/oder Aufblasen der Produktvorformlinge (5) in Abhängigkeit eines mittels der Bildauswertung gewonnenen Ergebnisses überprüft und/oder eingestellt wird.

7. Verfahren nach Anspruch 6, wobei der Maschinenparameter individuell für eine zum Blasen des Testbehälters (6) verwendete Blaskavität (2a) überprüft und/oder eingestellt wird.

8. Verfahren nach Anspruch 7, wobei die verwendete Blaskavität (2a) nach einem Überschreiten einer zulässigen Abweichung des Maschinenparameters von einem Sollwert selektiv mit wenigstens einem weiteren Testvorformling (4) beschickt wird.

9. Verfahren nach wenigstens einem der vorigen Ansprüche, wobei der Testvorformling (4) aus einer zu verarbeitenden Charge der Produktvorformlinge (5) entnommen und mit dem Testmuster (15) bedruckt wird.

10. Verfahren nach wenigstens einem der vorigen Ansprüche, bei dem der wenigstens eine Testbehälter (6), insbesondere wenigstens ein Testbehälter pro an der Blasmaschine (2) ausgebildeter Blaskavität (2a), automatisch nach Produktion einer vorgegebenen Behältermenge und/oder nach Ablauf einer vorgegebenen Produktionszeit kontrolliert wird.

11. Testvorformling (4), wobei der Testvorformling bezüglich seines Wandmaterials und seiner Abmessungen einem Produktvorformling (5) entspricht, und wobei auf dem Testvorformling ein, insbesondere regelmäßiges und/oder äquidistantes, Testmuster (15) aufweist, der Vorformling ist **gekennzeichnet dadurch, dass** der Testvorformling zum durchführen des Verfahrens nach wenigstens einem der vorigen Ansprüche geeignet ist und, dass der Testmuster aufgedruckt ist.

12. Testvorformling nach Anspruch 11, wobei das Testmuster (15) auf dem Bodenbereich (4a) des Testvorformlings (4) in Form konzentrischer Ringe (15a) oder Ringsegmente aufgedruckt ist, die insbesondere äquidistant zueinander ausgebildet sind, und/oder wobei das Testmuster (15) in einem Seitenwandbereich (4b) des Testvorformlings in Form eines Rasters (15b) aufgedruckt ist, das insbesondere in Längsrichtung (20) und/oder Umfangsrichtung (21) äquidistant ist.

13. Testvorformling nach Anspruch 11 oder 12, wobei das Testmuster einen FluoreszenzFarbstoff enthält und bei Beleuchtung im sichtbaren Spektralbereich für das menschliche Auge unsichtbar ausgebildet ist.

14. Testvorformling nach einem der Ansprüche 11 bis 13, ferner mit einer aufgedruckten Identifikationsmarke (22) zur Identifizierung des Testvorformlings (4) und/oder des daraus geblasenen Testbehälters (6).

15. Blasmaschine (2) um eine an der Blasmaschine ausgebildete Blaskavität (2a) gezielt mit dem Testvorformling zu beschicken, und mit wenigstens einer Kamera (8, 9) zum Abbilden des daraus in der Blaskavität (2a) geblasenen Testbehälters (6), **dadurch gekennzeichnet, dass** die Blasmaschine (2) zum Durchführen des Verfahrens nach wenigstens einem der Ansprüche 1 bis 10 geeignet ist, und dass eine getaktete Einschleusvorrichtung (3) der Testvorformling (4) an einer vorgegebenen Produktstromposition (P2) in den einlaufenden Strom aus Produktvorformlingen (5) einschleusen lässt.

## Claims

1. Method for production control in stretch blow molding of plastic containers in a blow molding machine (2), comprising the steps of
a) infeeding at least one test preform (4), in particular printed in a regular and/or equidistant manner, with a test pattern, into a stream of product preforms (5) entering said blowing molding machine;
b) blowing said product preforms and said test preform during the continuous operation of said blow molding machine to form product containers (7) and to form a test container (6); and
c) imaging said test pattern (15') on said test container with at least one camera (8, 9), the method being **characterized in that** the test pattern is printed.

2. Method according to claim 1, wherein said test pattern (15) on said test preform (4) is registered by imaging.

3. Method according to claim 1 or 2, wherein said test preform (4) is at a predetermined product stream position (P2) fed into the incoming stream of product preforms (5).

4. Method according to one of the preceding claims, wherein said test container (6) is allocated a blow cavity (2a) of said blow molding machine (2) for blowing said test container and/or a heating element (16a) for heating said test preform (4).

5. Method according to at least one of the preceding claims, wherein said imaged test pattern (15') of said test container (6) is measured by using image evaluation and/or compared with at least one reference pattern (14).

6. Method according to claim 5, wherein at least one machine parameter for heating and/or blowing said product preforms (5) is evaluated and/or adjusted in dependency of a result obtained by said image evaluation.

7. Method according to claim 6, wherein said machine parameter is individually evaluated and/or adjusted for a blow cavity (2a) used for blowing said test container (6).

8. Method according to claim 7, wherein said blow cavity (2a) is selectively fed at least one further test preform (4) when said machine parameter exceeds a permissible deviation from a target value.

9. Method according to at least one of the preceding claims, wherein said test preform (4) is removed from a batch of product preforms (5) to be processed and is provided with the printed test pattern (15).

10. Method according to at least one of the preceding claims, wherein said at least one test container (6), in particular at least one test container for every blow cavity (2a) formed at said blow molding machine (2), is automatically controlled after production of a predetermined number of containers and/or after a predetermined production period.

11. Test preform (4), where said test preform in terms of its wall material and its dimensions corresponds to a product preform (5), and where said test perform comprises in particular a regular and/or equidistant test pattern (15), **characterized in that** said test preform is suitable for performing the method according to at least one of the preceding claims, and the test pattern is printed.

12. Test preform according to claim 11, where said test pattern (15) is printed onto the base portion (4a) of said test preform (4) in the shape of concentric rings (15a) or ring segments which are formed, in particular, equidistant to each other and/or where said test pattern (15) is printed onto a side wall portion (4b) of said test preform in the shape of a grid (15b) that is equidistant, in particular, in the longitudinal direction (20) and/or in the circumferential direction (21).

13. Test preform according to claim 11 or 12, where said test pattern comprises a fluorescent dye and is formed invisible to the human eye when illuminated in the visible spectral range.

14. Test preform according to one of the claims 11 to 13, further comprising an identification marking (22) printed on for identifying said test preform (4) and/or said test container (6) blown therefrom.

15. Blow molding machine (2) for selectively supplying a blow cavity (2a) formed at said blow molding machine with said test preform, and with at least one camera (8, 9) for imaging said test container (6) blown therefrom in said blow cavity (2a), **characterized in that** the blow molding machine (2) is suitable for performing the method according to at least one of the claims 1 to 10, and a clocked infeed device (3) with which said test preform (4) can be fed into the incoming stream of product preforms (5) at a predetermined product stream position (P2).

## Revendications

1. Procédé de contrôle de production lors de l'étirage-soufflage de contenants en matière plastique dans une machine de moulage par soufflage (2), comprenant les étapes suivantes :
- introduction dans un flux de préformes de produit (5) entrant dans la machine de moulage par soufflage, d'au moins une préforme de test (4) imprimée avec des motifs notamment réguliers et/ou équidistants ;
- soufflage des préformes de produit et de la préforme de test en fonctionnement continu de la machine de moulage par soufflage, pour obtenir des contenants de produit (7) et un contenant de test (6) ; et
- reproduction sous forme d'image du motif de test (15') sur le contenant de test à l'aide d'au moins une caméra (8, 9),
le procédé étant **caractérisé en ce que** les motifs de test sont imprimés.

2. Procédé selon la revendication 1, d'après lequel le motif de test (15) sur la préforme de test (4) est enregistré pour être reproduit sous forme d'image.

3. Procédé selon la revendication 1 ou la revendication 2, d'après lequel la préforme de test (4) est introduite en une position de flux de produit prédéterminée (P2), dans le flux entrant de préformes de produit (5).

4. Procédé selon l'une des revendications précédentes, d'après lequel au contenant de test (6) est/sont associé(s) une cavité de soufflage (2a) de la machine de moulage par soufflage (2) pour le soufflage du contenant de test et/ou un élément chauffant (16a) destiné à chauffer la préforme de test (4).

5. Procédé selon l'une au moins des revendications précédentes, d'après lequel le motif de test (15') représenté sous forme d'image du contenant de test (6), est mesuré par traitement de l'image et/ou est comparé à au moins un motif de référence (14).

6. Procédé selon la revendication 5, d'après lequel au moins un paramètre de machine pour l'échauffement et/ou le soufflage des préformes de produit (5), est vérifié et/ou réglé en fonction d'un résultat obtenu à l'aide du traitement d'image.

7. Procédé selon la revendication 6, d'après lequel le paramètre de machine est vérifié et/ou réglé individuellement pour une cavité de soufflage (2a) utilisée pour le moulage par soufflage du contenant de test (6).

8. Procédé selon la revendication 7, d'après lequel en cas de dépassement d'un écart toléré du paramètre de machine par rapport à une valeur de consigne, la cavité de soufflage (2a) utilisée est chargée sélectivement avec une autre préforme de test (4).

9. Procédé selon l'une au moins des revendications précédentes, d'après lequel la préforme de test (4) est prélevée d'une charge à traiter des préformes de produit (5), et est imprimée avec le motif de test (15).

10. Procédé selon l'une au moins des revendications précédentes, d'après lequel ledit au moins un contenant de test (6), notamment au moins un contenant de test par cavité de soufflage (2a) formée dans la machine de moulage par soufflage (6), est contrôlé automatiquement après production d'une quantité prédéterminée de contenants et/ou après écoulement d'un temps de production prédéterminée.

11. Préforme de test (4) configurée de façon à ce que la préforme de test corresponde, quant à son matériau de paroi et à ses dimensions, à une préforme de produit (5), et que la préforme de test présente un motif (15) notamment régulier et/ou équidistant, la préforme étant **caractérisée en ce que** la préforme de test est adaptée à la mise en oeuvre du procédé selon l'une au moins des revendications précédentes, et **en ce que** le motif de test est imprimé.

12. Préforme de test selon la revendication 11, dans laquelle le motif de test (15) est imprimé sur la zone de fond (4a) de la préforme de test (4), sous la forme d'anneaux concentriques (15a) ou segments d'anneau concentriques, qui sont notamment réalisés équidistants les uns des autres, et/ou dans laquelle le motif de test (15) est imprimé sur une zone de paroi latérale (4b) de la préforme de test, sous la forme d'un réseau (15b), qui est équidistant notamment dans la direction longitudinale (20) et/ou dans la direction périphérique (21).

13. Préforme de test selon la revendication 11 ou la revendication 12, dans laquelle le motif de test renferme un colorant fluorescent, et, en cas d'éclairement dans le domaine spectral visible, est de configuration invisible pour l'oeil humain.

14. Préforme de test selon l'une des revendications 11 à 13, comprenant, en outre, une marque d'identification (22) y ayant été appliquée par impression, pour l'identification de la préforme de test (4) et/ou du contenant de test (6) obtenu par soufflage de la préforme de test.

15. Machine de moulage par soufflage (2) conçue pour permettre l'alimentation d'une cavité de soufflage (2a) formée dans la machine de moulage par soufflage, de manière ciblée avec la préforme de test, et comprenant au moins une caméra (8, 9) pour reproduire sous forme d'image le contenant de test (6) obtenu par soufflage de la préforme de test dans la cavité de soufflage (2a), **caractérisée en ce que** la machine de moulage par soufflage (2) est adaptée à la mise en oeuvre du procédé selon l'une au moins des revendications 1 à 10, et **en ce qu'**un dispositif d'introduction (3), cadencé, introduit la préforme de test (4) au niveau d'une position de flux de produit (P2) prédéterminée du flux entrant de préformes de produit (5).
